# EUROPEAN PATENT SPECIFICATION

(11) **EP 1 435 146 B1**
(45) Date of publication and mention of the grant of the patent: **18.05.2005**
(21) Application number: 01976307.7
(22) Date of filing: 12.10.2001
(51) Int. Cl.: H04L 1/00, H04L 27/00, H04B 7/005

(54) **ADAPTIVE POINT-TO-POINT MICROWAVE RADIO SYSTEM**
ADAPTIVES PUNKT-ZU-PUNKT-MIKROWELLENFUNKSYSTEM
SYSTEME RADIO MICRO-ONDE ADAPTATIF POINT A POINT

(43) Date of publication of application: 07.07.2004
(60) Divisional application: 05006109.2
(73) Proprietor: Nokia Corporation, 02150 Espoo (FI)
(72) Inventor: MÄKINEN, Jarmo, FIN-02730 Espoo (FI); LEIKAS, Aimo, FIN-00550 Helsinki (FI); LOUHI, Jyrki, FIN-02660 Espoo (FI); PEHKONEN, Mika, FIN-02760 Espoo (FI)
(74) Representative: Cohausz & Florack
(86) International application number: PCT/EP2001/011827
(87) International publication number: WO 2003/034639

(56) References cited:
- EP-A- 0 713 300
- WO-A-00/21235
- WO-A-01/47144
- WO-A-99/12304
- US-A- 5 909 469
- US-B1- 6 262 994
- JIWOONG LEE ET AL: "An adaptive time slot allocation strategy for W-CDMA/TDD system" IEEE VTS 53RD VEHICULAR TECHNOLOGY CONFERENCE 2001 VTC 2, vol. 4, 6 - 9 May 2001, pages 2509-2513, XP002902507 ISBN: 0-7803-6728-6

## Description

### FIELD OF THE INVENTION

The invention relates to a method for transmitting signals via a point-to-point microwave radio link from a transmitting unit to a receiving unit of a point-to-point microwave radio system, which signals comprise packets. The invention relates equally to such a point-to-point microwave radio system comprising two units between which signals are to be transmitted in at least one direction, and to a transmitting unit for such a system.

### BACKGROUND OF THE INVENTION

Point-to-point microwave radio systems are known in the state of the art. They have been defined for example in the European Standard ETSI EN 300 198 V1.4.1: "Fixed Radio Systems; Point-to-point equipment". Microwave radio links can be employed in particular instead of a wired connection between all elements of a network for which a fixed connection is desired.

Point-to-point microwave radio systems have traditionally been designed for Time Division Multiplex (TDM) like traffic. This means that a transmitting unit of the system provides a constant bit rate channel, which is often, though not always, transparent. Using this constant bit rate channel, the transmitting unit transmits packets embedded in the constant bitstream, e.g. using PPP protocol in conjunction with IP packets, to a receiving unit at the other end of the radio link. Each transmitting unit can include a multiplexer that multiplexes different signals together to form an aggregate signal to be transmitted on the constant bit rate channel to the receiving unit. The multiplexed signals can comprise in particular packets of payload bit streams and of control signals.

The respective bit rate of a constant bit rate channel provided by a transmitting unit of conventional point-to-point microwave radio systems is selected according to different requirements. For the radio links, an availability percentage is defined as a certain yearly probability, with which the air interface can carry the signal with a low enough bit error rate in varying propagation conditions. The bit rate is determined primarily by the required bit rate, which depends on the required capacity, i.e. the assumed traffic load. The availability of transmission channels may also limit the choice. When the target bit rate is known, an availability target is set, and based on these conditions, the appropriate modulation and transmission power is determined in order to fill the given requirements. In a conventional point-to-point system, the modulation and bit rate are constant.

This means that most of the time, the propagation conditions would allow much higher bit rates to be transported, since they will correspond only rarely to the assumed worst case propagation conditions. Thus, the air interface is often not used efficiently.

In patent application WO 01/47144 A1, it is mentioned that in wireless packet data systems, channel throughput can be adjusted by selecting an appropriate modulation and coding scheme for a given link quality between a mobile station and a wireless packet data system.

The patent US 5,909,469 A relates to a digital communication system that supports multiple modulation schemes. Link adaptation methods are mentioned, which provide the ability to change modulation and/or coding dynamically based on the channel conditions to balance the user bit rate against link quality.

In patent application WO 99/12304 A1, it is proposed to select one combination of a plurality of combinations of modulation and channel coding schemes that provides the best user quality value in view of a measured link quality parameter of an RF link.

In patent application WO 00/21235 A1, a method is proposed for administering modulation and channel coding in a plurality of radio links of a given cell in a digital cellular radio communication network. A single modulation and channel coding scheme, which is to be used in all of the radio links, is determined depending on received quality information indicative of a communication quality associated with the plurality of links.

The patent application EP 0 713 300 A1 relates to making adjustments to a local subscriber unit to reduce interference in a foreign system. The adjustments include in the case of interference increasing the coding rates by selecting a higher M-ary modulation scheme.

The patent US 6,262,994 B1 relates to an arrangement for optimizing the data transmission via a bi-directional radio channel. The size of data packets and/or the type of modulation and/or the code rate of a forward error correction and/or the power of the transmitter is varied, dependent on an error rate transmitted back, such that a predetermined error rate is achieved at the reception side.

### SUMMARY OF THE INVENTION

It is an object of the invention to optimize a point-to-point microwave radio system for packet type traffic. It is in particular an object to increase the efficiency of a radio link in such a system.

This object is reached on the one hand with a method for transmitting signals via a point-to-point microwave radio link from a transmitting unit to a receiving unit of a point-to-point microwave radio system, which signals comprise packets. In a first step, the packets are classified before transmission based on at least one quality of service parameter assigned to each packet. In a second step, the signals are modulated by the transmitting unit for transmission with a real-time adaptive modulation. This modulation is adapted based on the traffic amount, on signal quality measurements indicative of the propagation conditions on the radio link, and on the classification of packets comprised in the signals.

On the other hand, the object is reached with a point-to-point microwave radio system comprising two units between which signals can be transmitted in at least one direction via a point-to-point microwave radio link, which two units comprise means for realizing a transmission according to the proposed method. Finally, the object is reached with a transmitting unit for such a system comprising means for transmitting signals according to the proposed method.

The transmitting unit and the receiving unit can both be realized as exclusively transmitting or receiving unit or as a transceiver unit. Accordingly, of the two units of the proposed point-to-point microwave radio system one is at least a transmitting unit and one at least a receiving unit, while one or both units can also be realized as transceiver unit or as a combination of a transmitting and a receiving unit. The proposed adaptation of transmissions can be realized only in one direction or in both directions of a point-to-point radio link.

The invention proceeds from the idea that the air interface can be used more efficiently, if the bit rate employed by a transmitting unit is not fixed, but rather adapted to diverse transmission conditions. This is achieved according to the invention by adapting at least the modulation scheme applied to signals that are to be transmitted on the radio link. With a higher order modulation, information can be packed to a shorter transmission burst than with a lower order modulation. Since accordingly time is left to transport more information, a higher bit rate is achieved. In order to ensure that the quality required for a particular transmissions is maintained, the modulation is adapted according to the current amount of traffic, according to the current conditions on the transmission path and according to the requirements for the respective packets transmitted in a signal, preferably in this priority order. The requirements for the packets are grouped by the proposed classification of the packets according to at least one quality of service parameter assigned to the packets. The conditions on the transmission path are reflected by quality measurements of signals that were transmitted on the radio link before.

It is an advantage of the invention that it improves the efficiency on the air interface. As a result, also a better cost and/or performance ratio can be achieved. In addition, the tolerance for disturbances, e.g. changing weather conditions, can be enhanced. Thus, an intelligent media access control (MAC) of the point-to-point microwave radio system is achieved.

The packets comprised by the signals that are to be transmitted in the system are data units provided by some network element to a transmitting unit for transmission to a receiving unit. They can be in particular IP packets, ATM cells, or segments of segmented TDM bit streams. The system can put more than one packet to a single transmission burst, preferably packets of the same class. The modulation of the signals that are to be transmitted can be adapted burst by burst each time new signal quality measurements are available.

The packets can be classified based on any suitable quality of service (QoS) parameter or on a combination of suitable QoS parameters. In an IP system, the information included in the header field DiffServ (differentiated services) of an IP packet can be used for separating the packets. Equally, packets with a guaranteed quality of traffic and with a best effort traffic can be separated. The traffic can have a guaranteed quality in respect to different aspects, e.g. reliability, latency or delay. Further, packets may be separated into real-time and non real-time traffic. Moreover, the packets can be classified and thus prioritized depending on the network elements from which they are received at a transmitting unit or to which they are to be forwarded by a receiving unit.

The signal quality measurements employed as basis for adapting transmission parameters like modulation, coding, transmit power and time slot allocation are preferably performed by the respective receiving unit of a radio link. The receiving unit then transmits the measures values as a feedback to the transmitting unit for a subsequent transmission.

The signal quality measurements can be any signal quality measurement which reflects current conditions on the propagation path. Any suitable method can be used for implementing the signal quality measurements. For instance, the signal to noise-plus-interference ratio C/(N+I) can be employed, the signal strength, the number of bit errors detected (i.e. BER measured), or the number of "pseudo errors" detected, i.e. the instances, where an bit error was almost made, can be employed. This pseudo error method is described in international patent application WO 00/4417. It is also possible to use signaling quality indications provided by a forward error correction (FEC) decoder, e.g. an indication whether any corrections were needed or not.

An adaptive modulation of signals has been proposed for point-to-multipoint microwave radio systems e.g. in the IEEE draft P802.16/D4-2001: "Local and Metropolitan Area Networks - Part 16: Standard Air Interface for Fixed Broadband Wireless Access Systems", which is incorporated by reference herein. The standard specifies the air interface, including the medium access control layer (MAC) and a physical layer (PHY), of fixed point-to-multipoint broadband wireless access systems providing multiple services. The features described in this document can be adapted to further develop the method and the point-to-point microwave radio systems of the invention. These features include beside the adaptive modulation the ability to change coding and terminal transmit power in real time as a function of prevailing propagation conditions. They also include the ability to prioritize packets for transmission based on standard QoS classification parameters or to prioritize between network interfaces if multiple network interfaces are used, and the ability to switch off the transmitter, if a terminal does not have anything to transmit.

It is to be noted, however, that the point-to-point microwave radio system of the invention is not to be understood as a special case of a point-to-multipoint microwave radio system, but rather as a system designed specifically for point-to-point transmissions.

In point-to-multipoint systems, the intelligence required for adapting a transmission to the conditions on the propagation path is always integrated in network elements called base stations, which can serve as a respective single end of a transmission. Other network elements involved in point-to-multipoint transmissions as the multiple ends are referred to as terminals and do not comprise such intelligence.

Two known point-to-multipoint terminals will not be able to establish a link between each other without modifications. Equally, two known point-to-multipoint base stations will not be able to establish a link between each other.

In point-to-point radio systems the responsibility and intelligence for adaptation preferably exist in both ends, but in some special cases the main responsibility may be more bound to other end. As there is intelligence in both ends, each transmitter controls the modulation of its outbound signals, whereas if the intelligence is only in one end, this one end controls the modulation in both directions. The intelligence may also be divided in some other way between the two ends of a point-to-point microwave radio link. Naturally, a divided decision responsibility requires negotiation to take place between the two parties.

Moreover, in dedicated point-to-point microwave radio systems, there is always the same amount of timeslots available, whereas in point-to-multipoint timeslots can be borrowed from another connection within the same sector.

Preferred embodiments of the invention become apparent from the subclaims.

The invention can be employed for any desired fixed connection between two elements, in particular network elements. The invention can be employed for example, but not exclusively, for a connection between a Broadband Wireless Access network, which may be a private company network, and an internet service provider (ISP) network, as a backhaul radio between a PMP radio system and an ISP network, or within a cellular network base station subsystem.

Other features and advantages of the present invention will become apparent from the following detailed description considered in conjunction with the accompanying drawing. It is to be understood, however, that the drawing is designed solely for purposes of illustration and not as a definition of the limits of the invention, for which reference should be made to the appended claims.

### BRIEF DESCRIPTION OF THE FIGURES

The invention is described in more detail with reference to drawings, of which
- Fig. 1: schematically shows an embodiment of a point-to-point microwave radio system in which the invention can be implemented; and
- Fig. 2: schematically shows an embodiment of a transceiver according to the invention.

### DETAILED DESCRIPTION OF THE INVENTION

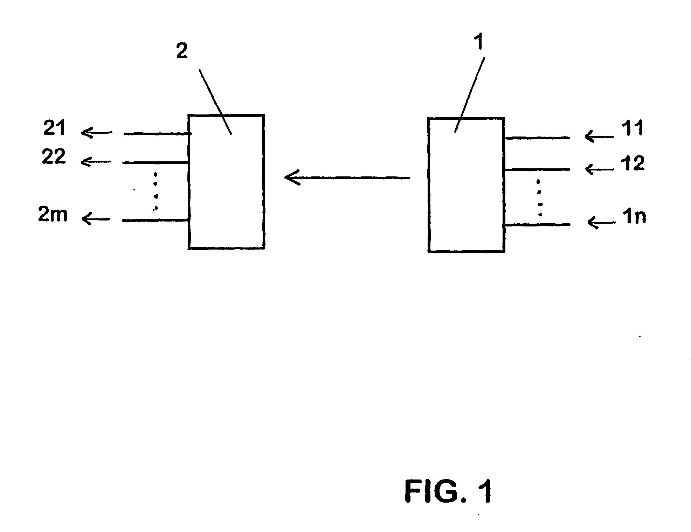

The embodiment of a point-to-point microwave radio system according to the invention depicted in figure 1 can be employed for instance for establishing a fixed connection between a Broadband Wireless Access network and an ISP network.

The system can be either an FDD or a TDD based system which comprises a first transceiver 1 and a second transceiver 2. Between the two transceivers 1, 2 signals are to be transmitted bi-directionally and point-to-point over the air interface by using microwave radio signals. In FDD these signals are transmitted in frames or bursts in go and return channels and in TDD these signals are transmitted in transmit and receive frames or bursts. The first transceiver 1 is connected to n network interfaces 11, 12, ... 1n, e.g. the respective interface of several Broadband Wireless Access network elements, while the second transceiver 2 is connected to m network interfaces 21, 22, ... 2m, e.g. the respective interface of several ISP network elements. Both transceivers 1, 2 comprise multiplexing means, adaptive modulation means, adaptive coding means, a transmitter with an adjustable transmit power, a receiver, means for measuring the signal quality of signals received via a microwave radio link, and processing means having a controlling access to the adaptive modulation means, the coding means and the transmitter.

The first transceiver 1 receives via the network interfaces 11, 12, ... In packets of signals that are to be transmitted over the air interface to the second transceiver 2. This is indicated in the figure by arrows.

The processing means of the first transceiver 1 classify all incoming packets based on QoS parameters assigned to the respective packet. More specifically, the processing means separate real-time traffic packets from non real-time traffic packets and packets with a guaranteed quality from packets for which only best effort traffic is required. This way, the packets are associated to classes with different requirements with regard to bit rate and quality.

The multiplexing means of the first transceiver 1 then multiplex payload bit streams and control signals provided in packets by a single network interface 11, 12, ... 1n to form an aggregate signal. At the same time, the multiplexing means of the first transceiver 1 aggregate packets provided by the different network interfaces 11, 12, ... In. The multiplexing means can take care that packets of the same class are placed consecutively.

In addition, the first unit 1 receives from the second transceiver 2 regularly signal quality measurement results.

These results comprise a quality indication by an FEC, a BER, a pseudo error, a received signal level or a signal to noise-plus-interference ratio C/(N+I) determined at the second transceiver 2 for the preceding signals that were transmitted via the radio link. The measurement results thus indicate the current conditions on the radio link between the two transceivers 1, 2.

The signals aggregated by the multiplexing means of the first transceiver 1 are to be transmitted on the radio link in frames or bursts, each frame or burst comprising several packets. Based, in this priority order, on the current amount of outbound traffic, on the current conditions on the transmission path and on the respective class to which packets in one burst were associated, the processing means of the first transceiver 1 determine on a real-time basis an optimal combination of modulation, coding and transmit power for a burst comprising these packets in a way that ensures an optimal efficiency on the air interface.

The bit rate may be reduced for example by selecting a simple modulation and/or the coding scheme whenever bad channel conditions were detected, as far as this cannot be compensated by a higher transmission power. Further, the processing means of the first unit 1 can decide that some packets have to be queued in a buffer before transmission or to be dropped completely, in order to ensure that the required transmission time for real-time or other delay sensitive class traffic packets can be met also in case of bad conditions on the radio link. Packets may also first be queued in a buffer and then be dropped later if they still cannot be forwarded after the buffering. Thus, the invention is of particular advantage for connections which contain a certain portion of low priority traffic or traffic that is not delay sensitive.

Next, the adaptive coding means of the first transceiver 1 code the outbound bursts or frames according to the determined coding scheme, the adaptive modulating means of the first transceiver 1 modulate the coded bursts or frames with the determined modulation scheme, and the transmitter transmit the modulated bursts or frames with the determined transmit power via the point-to-point microwave radio link to the second transceiver 2. The transmission via the air interface is indicated in the figure again by an arrow.

The modulation and the coding of the signals that are to be transmitted and the transmit power can be adapted in the first transceiver 1 burst by burst or frame by frame respectively each time new signal quality measurements are available.

The receiver of the second transceiver 2 receives the signals and takes care after an appropriate processing, including demodulation, decoding and possibly demultiplexing, of forwarding the signals to at least one connected network element via one or more of the network interfaces 21, 22, ..., 2m indicated in the figure as well by an arrow.

In many cases, bursts are contained in fixed length frames, and after the end of the burst, there might be spare time left before the end of the frame. During this time, the transmitter of the first transceiver 1 is switched off in order to avoid generating unnecessary interference to other links on the same channel or to other systems. In contrast to the previously presented aspects of the invention, which all relate to the MAC layer of the system, this aspect relates to the PHY layer of the system.

In figure 1, the transmission of signals is indicated only in one direction, but a transmission in opposite direction can be carried out correspondingly. In this case, the second transceiver 2 performs all tasks described above for the first transceiver 1 and vice versa.

In the case of TDD, the TDD timeslot allocation to the different transmission directions of the system can be used in addition for compensating simple modulations. For example, in case of bad weather conditions, which require a more simple modulation in order to achieve a good signal to noise (S/N) ratio, more timeslots are allocated to this traffic in order to maintain a sufficient capacity, in case only little capacity is needed at this time in the other direction. Thus, an adaptive capacity asymmetry between the opposite directions is implemented.

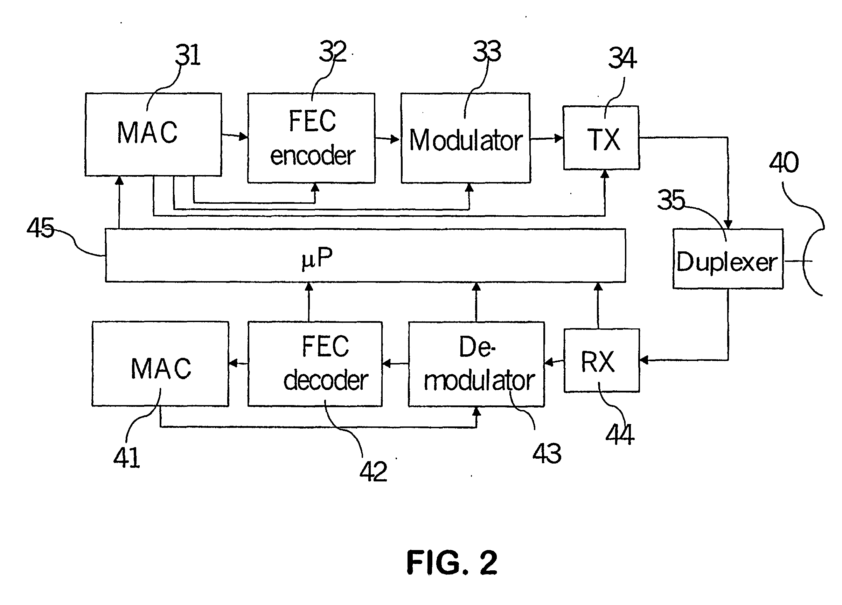

Figure 2 schematically presents in more detail a possible implementation of a transceiver according to the invention.

The depicted transceiver comprises for its function as transmitting unit a first MAC 31, an FEC encoder 32, a modulator 33 and a transmitter TX 34. An output of the MAC 31 is connected via the FEC encoder 32 and the modulator 33 to an input of the transmitter 34. In addition, the MAC 31 has a direct controlling access to control inputs of the FEC encoder 32, the modulator 33 and the transmitter 34. The MAC 31 is moreover connected, usually via a multiplexer, to interfaces of network elements from which signals are to be transmitted via a microwave radio link, which multiplexer, interfaces and network elements are not shown in figure 2.

The transceiver comprises for its function as receiving unit a receiver RX 44, a demodulator 43, an FEC decoder 32 and a second MAC 41. An output of the receiver 44 is connected via the demodulator 43 and the FEC decoder 32 to an input of the MAC 41. The MAC 41 further has a controlling access to the demodulator 43. The MAC 41 is moreover connected, preferably via a demultiplexer, to interfaces of network elements to which signals received via a microwave radio link are to be forwarded, which demultiplexer, interfaces and network elements are not shown in figure 2.

The output of the transceiver 34 and the input of the receiver 44 are connected via a duplexer 35 to a highly directional antenna 40. The antenna 40 provides the radio connection to the other end of the point-to-point microwave radio system, i.e. in figure 1 to the respective other transceiver 2 or 1.

Finally, the transceiver comprises a microprocessor 45. The microprocessor 45 has on the one hand access to the first MAC 31, and on the other hand inputs for control signals from the receiver 44, the demodulator 43 and the FEC decoder 42.

First, the receiving function of the transceiver of figure 2 will be explained.

Microwave signals transmitted by the transceiver of the other end of the point-to-point microwave radio system are received by the antenna 40 and provided to the duplexer 35. The duplexer 35, which is used for handling the two signaling directions from and to the antenna 40, forwards all received signals to the receiver 44. The receiver 44 forwards the signals further via the demodulator 43, which demodulates the signals, and the FEC decoder 42, which decodes the signals, to the MAC 41. The MAC 41 finally forwards the signals to a demultiplexer (not shown), which demultiplexes the processed signals and forwards them to the respective network elements for which the signals are destined. The MAC 41 may, but does not have to, provide control information to the demodulator 43, in order to enable the demodulator 43 to know what kind of signal it will probably receive. Alternatively, the demodulator 43 can be designed in a way that it receives control information for demodulation from a control channel using a predetermined modulation scheme, which is preferably a robust modulation scheme. The demodulator 43 is then always able to receive the information on the used modulation. Thus, the following incoming modulated data can be received correctly, since the used modulation scheme is known.

Based on the respectively received signals, the receiver 44, the demodulator 43 and the FEC decoder 42 provide in addition control signals to the microprocessor 45, which comprises intelligence for handling the information in received control signals.

More specifically, the receiver 44 provides control signals with information about the received signal level (RSL) of received signals. The demodulator 43 provides control signals with information about the signal quality, for instance on the signal to noise-plus-interference ratio S/(N+I). The FEC decoder 42 provides control signals with information on the received signal quality, for instance by reporting on the corrections needed for the signal.

For the transmitting function of the transceiver, signals that are to be transmitted arrive at the MAC 31, possibly via a multiplexer (not shown) which multiplexes signals proceeding from connected interfaces. The MAC 31 forwards the received multiplexed signals via the FEC encoder 32, which encodes the signals, and the modulator 33, which modulates the signals, to the transmitter 34. The transmitter 34 transmits the received signals with a selected transmission power via the duplexer 35 and the antenna 40 to the other end of the point-to-point microwave radio system.

For adapting the respective transmissions via the microwave radio link of the system according to the invention, the microprocessor 45 provides information on received signal quality etc. to the transmitting MAC 31. The MAC 31 determines in addition the current outbound amount of traffic and classifies the packets that are to be transmitted. Based on the determined information and on the received information, the MAC 31 controls the FEC encoder 32, the modulator 33 and the transmitter 34 via the respective control input, in order to achieve the optimum combination of the settings for signals that are to be transmitted as explained with reference to figure 1. The MAC 31 will thus control an adaptation of the coding made by the FEC encoder 32, the modulation scheme used by the modulator 33 and the transmission power employed by the transmitter 34.

The transceiver presented in figure 2 adapts the transmissions via the radio link based on signal quality measurements on received signals. Alternatively, the adaptation may be based on signal quality measurements performed at the other end of the radio link. In this case, information on the signal quality of signals received at the other end of the radio link may be included in subsequent signals transmitted by this other end and received via antenna 40. This information is then extracted from the signals after demodulation and decoding and provided to the microprocessor 45. This feedback information may be included in the internal control traffic part of the signals sent from the receiving unit to the transmitting unit over the bi-directional link.

While the invention was described as applied to a preferred embodiment, it will be understood that various omissions and substitutions and changes in the details of the devices and methods described may be made by those skilled in the art without departing from the spirit of the invention. It is also expressly intended that some of the described features and steps may be omitted. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. Method for transmitting signals via a radio link from a transmitting unit (1,2) to a receiving unit (2,1) of a radio system, wherein said signals comprise packets, and wherein said signals are modulated by said transmitting unit (1,2) for transmission with a real-time adaptive modulation, which modulation is adapted based on signal quality measurements indicative of the propagation conditions on the radio link
**characterized in that**
- said radio link is a point-to-point microwave radio link and said radio system is a point-to-point microwave radio system;
- said packets of said signals are classified before transmission based on at least one quality of service parameter associated to each packet; and
- said modulation is adapted in addition based on the current traffic amount and on the classification of packets comprised in the signals.

2. Method according to claim 1, wherein in addition an adaptive coding is applied to said signals by said transmitting unit (1,2), which coding is adapted based on the current traffic amount, on said signal quality measurements, and on said classification of packets comprised in the signals.

3. Method according to claim 1 or 2, wherein in addition an adaptive transmit power is employed by said transmitting unit (1,2) for transmitting signals, which transmission power is adapted based on the current traffic amount, on said signal quality measurements, and on said classification of packets comprised in the signals.

4. Method according to claim 3, wherein said adaptive transmission power can be reduced to zero, when there are no packets to send.

5. Method according to one of the preceding claims, wherein said classification assigns to each packet a specific priority, and wherein packets are buffered or dropped depending on their priority, if such buffering or dropping is necessary according to said signal quality measurements for maintaining a desired signal quality and/or bit rate for other packets to which a higher priority was assigned.

6. Method according to one of the preceding claims, wherein said point-to-point microwave radio link is employed bi-directionally using frequency division duplex (FDD).

7. Method according to one of claims 1 to 5, wherein said point-to-point microwave radio link is employed bi-directionally using time division duplex (TDD) timeslots for transmission of said signals, and wherein a TDD timeslot allocation to each direction is adapted based on the current traffic amount, on said signal quality measurements, and on said classification of packets comprised in the signals.

8. Method according to one of the preceding claims, wherein said adaptations are based on said traffic amount, said signal quality measurements and said classification of packets in this priority order.

9. Method according to one of the preceding claims, wherein said packets are internet protocol (IP) packets, and wherein said at least one quality of service parameter on which said classification of packets is based is information included in a differentiated services (DiffServ) field of a header of a respective IP packet.

10. Method according to one of the preceding claims, wherein said at least one quality of service parameter on which said classification of packets is based indicates whether a guaranteed quality of traffic or a best effort traffic is to be provided for a packet.

11. Method according to one of the preceding claims, wherein said at least one quality of service parameter on which said classification of packets is based indicates whether a packet comprises real-time or non real-time traffic.

12. Method according to one of the preceding claims, wherein said signal quality measurements comprise at least one of: a received signal level, a forward error correction (FEC) based quality indication, a pseudo error detection, and a signal to noise-plus-interference ratio (C/(N+I)).

13. Method according to one of the preceding claims, wherein said signal quality measurements are carried out by said receiving unit (2,1).

14. Method according to one of the preceding claims, wherein said signals comprise payload packets and/or internal control traffic.

15. Method according to one of the preceding claims, wherein said point-to-point microwave radio link is employed for bi-directional transmissions, and wherein said transmitting unit (1,2) receives from said receiving unit (2,1) via said radio link signals including internal control traffic, which internal control traffic comprises feedback information on measurement of the signal quality at said receiving unit (2,1) of signals transmitted via said radio link from said transmitting unit (1,2) to said receiving unit (2,1).

16. Method according to one of the preceding claims, wherein said signals comprise packets from several network interfaces (11,12,...,1n;21,22,...,2m).

17. Method according to one of the preceding claims, wherein there is always the same amount of timeslots available for a bi-directional point-to-point microwave radio link.

18. Method according to one of the preceding claims, wherein each transmitting unit (1,2) of a point-to-point microwave radio link evaluates said traffic amount, said signal quality measurements and said classification of packets itself for controlling its own transmissions.

19. Method according to one of claims 1 to 17, wherein said point-to-point microwave radio link can be used bi-directionally, and wherein one end of said radio - link evaluates said traffic amount, said signal quality measurements and said classification of packets for controlling the transmissions on either end of said radio link.

20. Radio system comprising two units (1,2) between which signals including packets are to be transmitted at least in one direction via a radio link, and means (31,33,35,40,42-45) for modulating said signals for transmission with a real-time adaptive modulation, which modulation is adapted based on signal quality measurements indicative of the propagation conditions on the radio link,
**characterized in that**
- said radio system is a point-to-point microwave radio system and said radio link is a point-to-point microwave radio link;
- said two units (1,2) comprise means (31) for classifying said packets before transmission based on at least one quality of service parameter associated to each packet; and
- said means (31,33,35,40,42-45) for modulating said signals for transmission modulate said signals with a modulation, which is adapted in addition
- based on the current traffic amount and on the classification of packets comprised in the signals.

21. Transmitting unit (1,2) for a radio system comprising means (34,35,40) for transmitting signals via a radio link to a receiving unit (2,1) of said radio system, and means (31,33,45) for modulating said signals for transmission with a real-time adaptive modulation, which modulation is adapted based on signal quality measurements indicative of the propagation conditions on the radio link
**characterized in that**
- said radio system is a point-to-point microwave radio system and said radio link is a point-to-point microwave radio link;
- said transmitting unit (1,2) comprise means (31) for classifying said packets before transmission based on at least one quality of service parameter associated to each packet; and
- said means (31,33,45) for modulating said signals for transmission modulate said signals with a modulation, which is adapted in addition based on the current traffic amount and on the classification of packets comprised in the signals.

22. Tranceiver unit (1,2) for a radio system comprising means (34,35,40) for transmitting signals via a radio link to a receiving unit (2,1) of said radio system, means (31,33,35,40,42-45) for modulating said signals for transmission with a real-time adaptive modulation, which modulation is adapted based on signal quality measurements indicative of the propagation conditions on the radio link, and means (40-45) for receiving signals via a radio link from a transmitting unit (2,1) of said radio system
**characterized in that**
- said radio system is a point-to-point microwave radio system and said radio link is a point-to-point microwave radio link;
- said transceiver unit (1,2) comprise means (31) for classifying said packets before transmission based on at least one quality of service parameter associated to each packet; and
- said means (31,33,35,40,42-45) for modulating said signals for transmission modulate said signals with a modulation, which is adapted in addition based on the current traffic amount and on the classification of packets comprised in the signals.

## Patentansprüche

1. Verfahren zum Übertragen von Signalen über eine Funkstrecke von einer Sendeeinheit (1, 2) zu einer Empfangseinheit (2, 1) eines Funksystems, wobei die Signale Pakete umfassen und wobei die Signale von der Sendeeinheit (1, 2) zur Übertragung mit einer adaptiven Modulation in Echtzeit moduliert werden, wobei diese Modulation auf der Grundlage von die Ausbreitungsbedingungen auf der Funkstrecke anzeigenden Signalgütemessungen angepasst wird, **dadurch gekennzeichnet, dass**
- die Funkstrecke eine Punkt-zu-Punkt-Mikrowellenfunkstrecke ist und das Funksystem ein Punkt-zu-Punkt-Mikrowellenfunksystem ist;
- die Pakete der Signale vor der Übertragung auf der Grundlage von wenigstens einem mit jedem Paket assoziierten Dienstgüteparameter klassifiziert werden und
- die Modulation außerdem auf der Grundlage des aktuellen Verkehrsaufkommens und der Klassifizierung von in den Signalen enthaltenen Paketen angepasst wird.

2. Verfahren nach Anspruch 1, bei dem außerdem von der Sendeeinheit (1, 2) eine adaptive Codierung auf die Signale angewendet wird, wobei diese Codierung auf der Grundlage des aktuellen Verkehrsaufkommens, der Signalgütemessungen und der Klassifizierung von in den Signalen enthaltenen Paketen angepasst wird.

3. Verfahren nach Anspruch 1 oder 2, bei dem außerdem von der Sendeeinheit (1, 2) zum Senden von Signalen eine adaptive Sendeleistung eingesetzt wird, wobei diese Sendeleistung auf der Grundlage des aktuellen Verkehrsaufkommens, der Signalgütemessungen und der Klassifizierung von in den Signalen enthaltenen Paketen angepasst wird.

4. Verfahren nach Anspruch 3, bei dem die adaptive Sendeleistung auf null reduziert werden kann, wenn keine Pakete zu senden sind.

5. Verfahren nach einem der vorhergehenden Ansprüche, bei dem die Klassifizierung jedem Paket eine spezifische Priorität zuweist und bei dem Pakete je nach ihrer Priorität zwischengespeichert oder fallengelassen werden, wenn ein derartiges Zwischenspeichern oder Fallenlassen gemäß den Signalgütemessungen notwendig ist, um eine erwünschte Signalgüte und/oder Bitrate für andere Pakete aufrecht zu erhalten, denen eine höhere Priorität zugeordnet wurde.

6. Verfahren nach einem der vorhergehenden Ansprüche, bei dem die Punkt-zu-Punkt-Mikrowellenfunkstrecke unter Verwendung des FDD-Verfahrens (Frequency Division Duplex) bidirektional eingesetzt wird.

7. Verfahren nach einem der Ansprüche 1 bis 5, bei dem die Punkt-zu-Punkt-Mikrowellenfunkstrecke unter Verwendung von TDD-(Time Division Multiplex)-Zeitschlitzen für die Übertragung der Signale bidirektional eingesetzt wird und bei dem eine TDD-Zeitschlitzzuordnung für jede Richtung auf der Grundlage des aktuellen Verkehrsaufkommens, der Signalgütemessungen und der Klassifizierung von in den Signalen enthaltenen Paketen angepasst wird.

8. Verfahren nach einem der vorhergehenden Ansprüche, bei dem die Anpassungen auf dem Verkehrsaufkommen, den Signalgütemessungen und der Klassifizierung von Paketen in dieser Prioritätsordnung basieren.

9. Verfahren nach einem der vorhergehenden Ansprüche, bei dem die Pakete Internet-Protokoll-(IP)-Pakete sind und bei dem der wenigstens eine Dienstgüteparameter, auf dem die Klassifizierung von Paketen basiert, in einem Anfangskennsatzfeld DiffServ (differentiated services) eines jeweiligen IP-Pakets enthaltene Information ist.

10. Verfahren nach einem der vorhergehenden Ansprüche, bei dem der wenigstens eine Dienstgüteparameter, auf dem die Klassifizierung von Paketen basiert, anzeigt, ob für ein Paket eine garantierte Verkehrsgüte oder ein Best-Effort-Verkehr bereitzustellen ist.

11. Verfahren nach einem der vorhergehenden Ansprüche, bei dem der wenigstens eine Dienstgüteparameter, auf dem die Klassifizierung von Paketen basiert, anzeigt, ob ein Paket Echtzeit- oder Nicht-Echtzeit-Verkehr umfasst.

12. Verfahren nach einem der vorhergehenden Ansprüche, bei dem die Signalgütemessungen wenigstens eines der Folgenden umfassen: einen Pegel des ankommenden Signals, eine auf Vorwärtsfehlerkorrektur (FEC) basierende Güteanzeige, eine Pseudofehlererkennung und einen Signal zu Rausch- und Störabstand (signal to noise plus interference ratio) (C/(N+I)).

13. Verfahren nach einem der vorhergehenden Ansprüche, bei dem die Signalgütemessungen von der Empfangseinheit (2, 1) durchgeführt werden.

14. Verfahren nach einem der vorhergehenden Ansprüche, bei dem die Signale Nutzdatenpakete und/oder internen Steuerverkehr umfassen.

15. Verfahren nach einem der vorhergehenden Ansprüche, bei dem die Punkt-zu-Punkt-Mikrowellenfunkstrecke für bidirektionale Übertragungen eingesetzt wird und bei dem die Sendeeinheit (1, 2) über die Funkstrecke internen Steuerverkehr einschließende Signale von der Empfangseinheit (2, 1) erhält, wobei der interne Steuerverkehr Rückkopplungsinformationen über die Messung der Signalgüte an der Empfangseinheit (2, 1) der über die Funkstrecke von der Sendeeinheit (1, 2) zu der Empfangseinheit (2, 1) übertragenen Signale umfasst.

16. Verfahren nach einem der vorhergehenden Ansprüche, bei dem die Signale Pakete von mehreren Netzschnittstellen (11, 12, ..., In; 21, 22, ..., 2m) umfassen.

17. Verfahren nach einem der vorhergehenden Ansprüche, bei dem stets die gleiche Menge von Zeitschlitzen für eine bidirektionale Punkt-zu-Punkt-Mikrowellenfunkstrecke zur Verfügung steht.

18. Verfahren nach einem der vorhergehenden Ansprüche, bei dem jede Sendeeinheit (1, 2) einer Punkt-zu-Punkt-Mikrowellenfunkstrecke das Verkehrsaufkommen, die Signalgütemessungen und die Klassifizierung von Paketen zum Steuern ihrer eigenen Übertragungen selbst auswertet.

19. Verfahren nach einem der Ansprüche 1 bis 17, bei dem die Punkt-zu-Punkt-Mikrowellenfunkstrecke bidirektional verwendet werden kann und bei dem ein Ende der Funkstrecke das Verkehrsaufkommen, die Signalgütemessungen und die Klassifizierung von Paketen zum Steuern der Übertragungen an beiden Enden der Funkstrecke auswertet.

20. Funksystem, umfassend zwei Einheiten (1, 2), zwischen denen Pakete aufweisende Signale wenigstens in einer Richtung über eine Funkstrecke zu übertragen sind, und Mittel (31, 33, 35, 40, 42-45) zum Modulieren der Signale zur Übertragung mit einer adaptiven Modulation in Echtzeit, wobei die Modulation auf der Grundlage von die Ausbreitungsbedingungen auf der Funkstrecke anzeigenden Signalgütemessungen angepasst wird, **dadurch gekennzeichnet, dass**
- das Funksystem ein Punkt-zu-Punkt-Mikrowellenfunksystem ist und die Funkstrecke eine Punkt-zu-Punkt-Mikrowellenfunkstrecke ist;
- die zwei Einheiten (1, 2) Mittel (31) zum Klassifizieren der Pakete vor der Übertragung auf der Grundlage von wenigstens einem mit jedem Paket assoziierten Dienstgüteparameter umfassen und
- die Mittel (31, 33, 35, 40, 42-45) zum Modulieren der Signale zur Übertragung die Signale mit einer Modulation modulieren, die außerdem auf der Grundlage des aktuellen Verkehrsaufkommens und der Klassifizierung von Paketen angepasst wird, die in den Signalen enthalten sind.

21. Sendeeinheit (1, 2) für ein Funksystem, umfassend Mittel (34, 35, 40) zum Senden von Signalen über eine Funkstrecke zu einer Empfangseinheit (2, 1) des Funksystems und Mittel (31, 33, 45) zum Modulieren der Signale zur Übertragung mit einer adaptiven Modulation in Echtzeit, wobei diese Modulation auf der Grundlage von die Ausbreitungsbedingungen auf der Funkstrecke anzeigenden Signalgütemessungen angepasst wird, **dadurch gekennzeichnet, dass**
- das Funksystem ein Punkt-zu-Punkt-Mikrowellenfunksystem ist und die Funkstrecke eine Punkt-zu-Punkt-Mikrowellenfunkstrecke ist;
- die Sendeeinheit (1, 2) Mittel (31) zum Klassifizieren der Pakete vor der Übertragung auf der Grundlage von wenigstens einem mit jedem Paket assoziierten Dienstgüteparameter umfasst und
- die Mittel (31, 33, 45) zum Modulieren der Signale zur Übertragung die Signale mit einer Modulation modulieren, die außerdem auf der Grundlage des aktuellen Verkehrsaufkommens und der Klassifizierung von Paketen angepasst wird, die in den Signalen enthalten sind.

22. Sende-/Empfangseinrichtung (1, 2) für ein Funksystem, umfassend Mittel (34, 35, 40) zum Senden von Signalen über eine Funkstrecke zu einer Empfangseinheit (2, 1) des Funksystems, Mittel (31, 33, 35, 40, 42-45) zum Modulieren der Signale zur Übertragung mit einer adaptiven Modulation in Echtzeit, wobei diese Modulation auf der Grundlage von die Ausbreitungsbedingungen auf der Funkstrecke anzeigenden Signalgütemessungen angepasst wird, und Mittel (40-45) zum Empfangen von Signalen über eine Funkstrecke von einer Sendeeinheit (2, 1) des Funksystems, **dadurch gekennzeichnet, dass**
- das Funksystem ein Punkt-zu-Punkt-Mikrowellenfunksystem ist und die Funkstrecke eine Punkt-zu-Punkt-Mikrowellenfunkstrecke ist;
- die Sende-/Empfangseinrichtung (1, 2) Mittel (31) zum Klassifizieren der Pakete vor der Übertragung auf der Grundlage von wenigstens einem mit jedem Paket assoziierten Dienstgüteparameter umfasst und
- die Mittel (31, 33, 35, 40, 42-45) zum Modulieren der Signale für die Übertragung die Signale mit einer Modulation modulieren, die außerdem auf der Grundlage des aktuellen Verkehrsaufkommens und der Klassifizierung von Paketen angepasst wird, die in den Signalen enthalten sind.

## Revendications

1. Procédé pour transmettre des signaux via une liaison radio depuis une unité d'émission (1, 2) à une unité de réception (2, 1) d'un système radio, dans lequel lesdits signaux comprennent des paquets, et dans lequel lesdits signaux sont modulés par ladite unité d'émission (1, 2) pour transmission avec une modulation adaptative en temps réel, laquelle modulation est adaptée sur la base des mesures de qualité de signal indicatives des conditions de propagation sur la liaison radio
**caractérisé en ce que**
- ladite liaison radio est une liaison radio hyperfréquence point à point et ledit système radio est un système radio hyperfréquence point à point ;
- lesdits paquets desdits signaux sont classifiés avant transmission sur la base d'au moins un paramètre de qualité de service associé à chaque paquet ; et
- ladite modulation est adaptée de plus sur la base du volume de trafic actuel et de la classification des paquets compris dans les signaux.

2. Procédé selon la revendication 1, dans lequel, de plus, un codage adaptatif est appliqué aux dits signaux par ladite unité d'émission (1, 2), lequel codage est adapté sur la base du volume de trafic actuel, desdites mesures de qualité de signal et de ladite classification des paquets compris dans les signaux.

3. Procédé selon la revendication 1 ou 2, dans lequel, de plus, une puissance d'émission adaptative est employée par ladite unité d'émission (1, 2) pour transmettre des signaux, laquelle puissance d'émission est adaptée sur la base du volume de trafic actuel, des mesures de qualité du signal et de ladite classification des paquets compris dans les signaux.

4. Procédé selon la revendication 3, dans lequel ladite puissance d'émission adaptative peut être réduite à zéro, lorsqu'il n'y a pas de paquets à envoyer.

5. Procédé selon l'une quelconque des revendications précédentes, dans lequel ladite classification affecte à chaque paquet une priorité spécifique, et dans lequel les paquets sont mis en mémoire tampon et supprimés en fonction de leur priorité, si une telle mise en mémoire tampon ou suppression est nécessaire en conformité avec lesdites mesures de qualité de signal pour maintenir une qualité de signal désirée et/ou un débit binaire pour les autres paquets pour lesquels une priorité plus élevée a été affectée.

6. Procédé selon l'une quelconque des revendications précédentes, dans lequel ladite liaison radio hyperfréquence point à point est employée bidirectionnellement en utilisant le duplexage par répartition de fréquence (FDD).

7. Procédé selon l'une quelconque des revendications 1 à 5, dans lequel ladite liaison radio hyperfréquence point à point est employée bidirectionnellement en utilisant les tranches temporelles de multiplexage par répartition dans le temps (TDD) pour la transmission desdits signaux, et dans lequel une affectation des tranches temporelles TDD à chaque direction est adaptée sur la base du volume de trafic actuel, desdites mesures de qualité de signal et de ladite classification des paquets compris dans les signaux.

8. Procédé selon l'une quelconque des revendications précédentes, dans lequel lesdites adaptations sont basées sur ladite quantité de volume du trafic, lesdites mesures de qualité de signal et ladite classification des paquets dans cet ordre de priorité.

9. Procédé selon l'une quelconque des revendications précédentes, dans lequel lesdits paquets sont des paquets du protocole Internet (IP), et dans lequel ledit au moins paramètre de qualité de service sur lequel ladite classification des paquets est basée comprend des informations incluses dans une zone d'en-tête de services différenciés (DiffServ) d'un paquet IP respectif.

10. Procédé selon l'une quelconque des revendications précédentes, dans lequel ledit au moins un paramètre de qualité de service sur lequel ladite classification des paquets est basée indique si une qualité de trafic garantie ou un trafic au meilleur prix doit être procuré pour un paquet.

11. Procédé selon l'une quelconque des revendications précédentes, dans lequel ledit au moins un paramètre de qualité de service sur lequel ladite classification des paquets est basée indique si un paquet comprend un trafic en temps réel ou non en temps réel.

12. Procédé selon l'une quelconque des revendications précédentes, dans lequel lesdites mesures de qualité de signal comprennent au moins un de : un niveau de signal reçu, une indication de qualité basée sur une correction d'erreur directe (FEC) , une détection de pseudo erreur, et un rapport signal à bruit plus interférence (C / (N + I)).

13. Procédé selon l'une quelconque des revendications précédentes, dans lequel lesdites mesures de qualité du signal sont effectuées par ladite unité de réception (2, 1).

14. Procédé selon l'une quelconque des revendications précédentes, dans lequel lesdits signaux comprennent des paquets de données utiles et/ou de trafic de commande interne.

15. Procédé selon l'une quelconque des revendications précédentes, dans lequel ladite liaison radio hyperfréquence point à point est employée pour les transmissions bidirectionnelles, et dans lequel ladite unité d'émission (1, 2) reçoit de ladite unité de réception (2, 1) via ladite liaison radio des signaux incluant le trafic de commande interne, lequel trafic de commande interne comprend des informations de contre-réaction concernant la mesure de la qualité de signal au niveau de ladite unité de réception (2, 1) des signaux transmis via ladite liaison radio depuis ladite unité d'émission (1, 2) à ladite unité de réception (2, 1) .

16. Procédé selon l'une quelconque des revendications précédentes, dans lequel lesdits signaux comprennent des paquets provenant de nombreuses interfaces réseaux (11, 12,..., 1n ; 21, 22,..., 2m).

17. Procédé selon l'une quelconque des revendications précédentes, dans lequel il existe toujours la même quantité de tranches temporelles disponible pour une liaison radio hyperfréquence point à point bidirectionnelle.

18. Procédé selon l'une quelconque des revendications précédentes, dans lequel chaque unité d'émission (1, 2) d'une liaison radio hyperfréquence point à point évalue ledit volume du trafic, lesdites mesures de qualité de signal et ladite classification de paquet elle-même pour commander ses propres transmissions.

19. Procédé selon l'une quelconque des revendications 1 à 17, dans lequel ladite liaison radio hyperfréquence point à point peut être utilisée bidirectionnellement et dans lequel une extrémité de ladite liaison radio évalue ledit volume de trafic, lesdites mesures de qualité de signal et ladite classification de paquets pour commander les transmissions sur chaque extrémité de ladite liaison radio.

20. Système radio comprenant deux unités (1, 2) entre lesquelles des signaux incluant les paquets peuvent être transmis au moins dans une direction via une liaison radio, et des moyens (31, 33, 35, 40, 42 à 45) pour moduler lesdits signaux pour transmission avec une modulation adaptative en temps réel, laquelle modulation est adaptée sur la base des mesures de qualité de signal indicatives des conditions de propagation sur la liaison radio,
**caractérisé en ce que**
- ledit système radio est un système radio hyperfréquence point à point et ladite liaison radio est une liaison radio hyperfréquence point à point ;
- lesdites deux unités (1, 2) comprennent des moyens (31) pour classifier lesdits paquets avant transmission sur la base d'au moins un paramètre de qualité de service associé à chaque paquet ; et
- lesdits moyens (31, 33, 35, 40, 42 à 45) pour moduler lesdits signaux pour transmission modulent lesdits signaux avec une modulation, laquelle est adaptée, de plus sur la base du volume de trafic actuel et de la classification des paquets compris dans les signaux.

21. Unité d'émission (1, 2) pour un système radio comprenant des moyens (34, 35, 40) pour transmettre des signaux via une liaison radio à une unité de réception (2, 1) dudit système radio, et des moyens (31, 33, 45) pour moduler lesdits signaux pour transmission avec une modulation adaptative en temps réel, laquelle modulation est adaptée sur la base des mesures de qualité de signal indicatives des conditions de propagation sur la liaison radio
**caractérisé en ce que**
- ledit système radio est un système radio hyperfréquence point à point et ladite liaison radio est une liaison radio hyperfréquence point à point ;
- ladite unité d'émission (1, 2) comprend des moyens (31) pour classifier lesdits paquets avant transmission sur la base d'au moins un paramètre de qualité de service associé à chaque paquet ; et
- lesdits moyens (31, 33, 45) pour moduler lesdits signaux pour transmission modulent lesdits signaux avec une modulation qui est adaptée, de plus sur la base du volume du trafic actuel et de la classification des paquets compris dans les signaux.

22. Unité d'émetteur/récepteur (1, 2) pour un système radio comprenant des moyens (34, 35, 40) pour transmettre des signaux via une liaison radio à une unité de réception (2, 1) dudit système radio, des moyens (31, 33, 35, 40, 42 à 45) pour moduler lesdits signaux pour transmission avec une modulation adaptative en temps réel, laquelle modulation est adaptée sur la base d'une mesure de, qualité de signal indicative des conditions de propagation sur la liaison radio, et des moyens (40 à 45) pour recevoir les signaux via liaison radio depuis une unité d'émission (2, 1) dudit système radio,
**caractérisé en ce que**
- ledit système radio est un système radio hyperfréquence point à point et ladite liaison radio est une liaison radio hyperfréquence point à point ;
- ladite unité d'émetteur/récepteur (1, 2) comprend des moyens (31) pour classifier lesdits paquets avant transmission sur la base d'au moins un paramètre de qualité de service associé à chaque paquet ; et
- lesdits moyens (31, 33, 35, 40, 42 à 45) pour moduler lesdits signaux pour transmission modulent lesdits signaux avec une modulation, qui est adaptée, de plus, sur la base du volume du trafic actuel et de la classification des paquets compris dans les signaux.
